# EUROPEAN PATENT APPLICATION

(11) **EP 3 270 084 A1**
(43) Date of publication of application: **17.01.2018**
(21) Application number: 16179421.9
(22) Date of filing: 14.07.2016
(51) Int. Cl.: F28F 1/00, F28F 1/16, H02S 40/44, H02S 40/42

(54) **A POWER GENERATION SYSTEM AND A BUILDING**

(71) Applicant: OptiSolar PVT B.V., 3835 PR Stoutenburg (NL)
(72) Inventor: Van Holsteijn, Gerardus Jacobus Maria, 2294 CM Wateringen (NL)
(74) Representative: De Vries & Metman

(57) **Abstract**

A power generation system (1) for generating electrical and thermal energy comprises at least two separate photovoltaic panels (2) for converting sun light into electrical energy and an elongated heat exchanger (5) including a duct (6) for guiding a working fluid. The photovoltaic panels (2) and the heat exchanger (5) are fixed onto each other. The heat exchanger (5) is made from one piece.

## Description

The present invention relates to a power generation system for generating electrical and thermal energy, comprising at least two separate photovoltaic panels for converting sun light into electrical energy and an elongated heat exchanger including a duct for guiding a working fluid, wherein the photovoltaic panels and the heat exchanger are fixed onto each other.

Such a system is known in the art and is also called a power generating/harvesting system. The known system has a framework of longitudinal and sometimes transversal supporting profiles which are fixed to a roof or gable of a building or a structure. Each of the photovoltaic panels has a back side to which a heat exchanging unit is mounted. After fixing the photovoltaic panels including the heat exchanging units to the framework the heat exchanging units are coupled to each other through connecting tubes or profiles, hence forming the heat exchanger for at least two photovoltaic panels. The heat exchanger is coupled to a heat user such that the working fluid, for example water or glycol, can be heated in the vicinity of the photovoltaic panels and transmitted to the heat user. Usually the heat exchanger is located between the photovoltaic panels and an inclined roof of a building such that its longitudinal direction is inclined, whereas some space is left between the heat exchanger and the roof. This serves to create a heat flow along the heat exchanger at the lower side thereof.

A disadvantage of the known system is that couplings between the heat exchanging units are sensitive to leakage in practice.

An object of the invention is to provide an improved power generation system.

This object is achieved with the power generation system according to the invention, which is characterized in that the heat exchanger is made from one piece.

Due to this feature the duct of the heat exchanger does not have couplings between two neighbouring photovoltaic panels, hence the risk of leakage of the heat exchanger at a transfer between two adjacent photovoltaic panels is eliminated. Furthermore, labour for installing the system is minimized. Besides, the heat exchanger itself can function as a supporting beam to which at least two photovoltaic panels can be attached. This allows to eliminate a separate supporting beam. In other words, the heat exchanger and the supporting beam are integrated.

The heat exchanger may comprise an extruded profile, for example made of aluminium.

In a practical embodiment the system comprises a framework of longitudinal and transversal supporting profiles for supporting the photovoltaic panels, wherein the longitudinal and transversal profiles are fixed to each other and at least one of the profiles is formed by the heat exchanger. For example the framework is suitable for an inclined roof, where the longitudinal profiles extend horizontally and the transversal profiles are inclined with respect to the horizontal, for example parallel to the inclined roof, whereas the transversal profiles are heat exchangers as described above.

The width of the heat exchanger may be smaller than half of the widths of the respective photovoltaic panels. In practice the width may be smaller than 30% of the widths of the respective photovoltaic panels. Each of the photovoltaic panels can be fixed to two or more heat exchangers.

More specifically, the heat exchanger may be a first heat exchanger whereas the system comprises at least a second heat exchanger which is similar to the first heat exchanger and extends substantially parallel to the first heat exchanger, and the photovoltaic panels and the heat exchangers are fixed onto each other.

A contact surface between one photovoltaic panel and the heat exchanger may be larger than 80% of an outer surface portion of the heat exchanger which faces the panel, preferably larger than 90%. This means that the photovoltaic panel and the heat exchanger contact each other to a large extent causing a relatively high heat transfer characteristic.

The invention is also related to a building, comprising an outer side and a power generation system according to one of the preceding claims, wherein the power generation system is mounted on the outer side of the building and the heat exchanger is located between the photovoltaic panels and the outer side of the building. In practice the outer side may be a roof.

The invention will hereafter be elucidated with reference to very schematic drawings showing an embodiment of the invention by way of example.
Fig. 1 is a perspective and partly cutaway view of a building including an embodiment of the power generation system according to the invention.
Fig. 2 is an enlarged view of a part of the system which is indicated by II in Fig. 1.
Fig. 3 is an enlarged cross-sectional view of a part of the embodiment along the line III-III in Fig. 1.

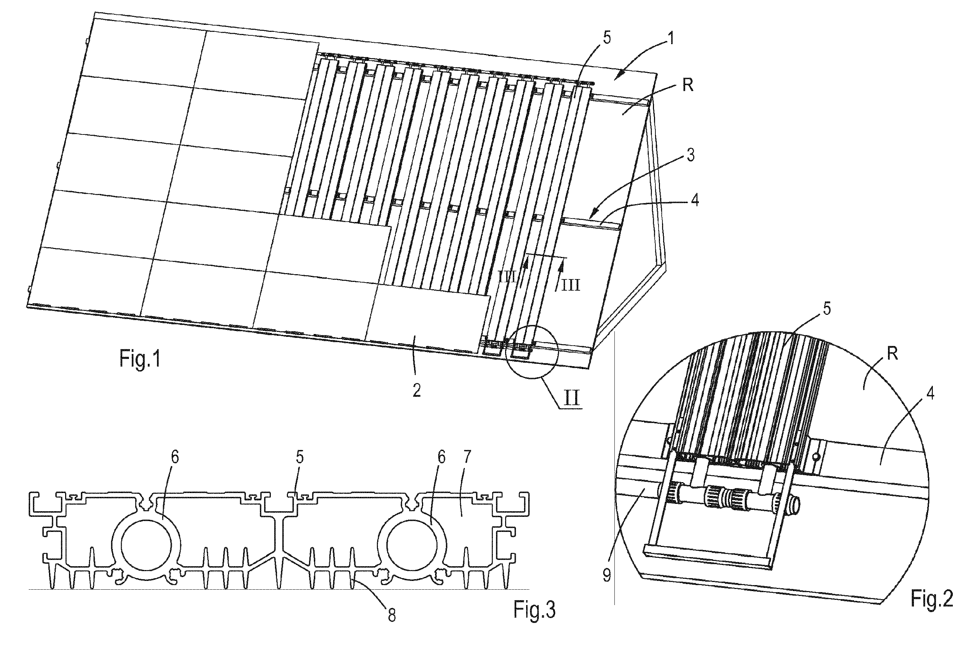

Figs. 1 and 2 show a building which is provided with an embodiment of a power generation system 1 according to the invention. The power generation system 1 is a combined system which generates electrical energy as well as heat energy. The embodiment as shown has 25 separate photovoltaic panels 2 for converting sun light into electrical energy; for explanatory reasons Fig. 1 shows 13 photovoltaic panels 2. The photovoltaic panels 2 are fixed to a framework 3 which is fixed to a roof R of the building. In Fig. 1 the roof R is inclined, but the system is also suitable for different roofs. The framework 3 has longitudinal supporting profiles 4 and transversal supporting profiles 5 which extend perpendicularly to the longitudinal supporting profiles 4. The longitudinal supporting profiles 4 are fixed to the roof R of the building and the transversal supporting profiles 5 extend on top of the longitudinal supporting profiles 4 and are fixed to them. Each transversal supporting profile 5 is made from one piece, for example by extruding aluminium.

The photovoltaic panels 2 are attached to the respective transversal supporting profiles 5. In the embodiment as shown in Fig. 1 five photovoltaic panels 2 are fixed to four neigbouring parallel transversal supporting profiles 5, but a different number of photovoltaic panels 2 and/or transversal supporting profiles 5 is conceivable.

Fig. 3 shows a cross-section of one of the transversal supporting profiles 5. The transversal supporting profile 5 extends between the photovoltaic panel 2 and the roof R, whereas a space is present between the transversal supporting profile 5 and the roof R. The transversal supporting profile 5 has two ducts 6 through which a working fluid such as water flows under operating conditions. The transversal supporting profile 5 functions as a heat exchanger. The ducts 6 are located within the transversal supporting profile 5 such that at circumferential outer sides thereof channels 7 are present. Under operating conditions ambient air can flow through the channels 7 in order to transfer heat from passing ambient air to the heating fluid flowing through the ducts 6. The transversal supporting profile 5 is also provided with cooling ribs 8 which protrude outwardly from the circumference of the transversal supporting profile 7 as well as into the channels 7. It is noted that an alternative transversal supporting profile 5 may have a different shape, different dimensions and a different number of ducts 6.

Fig. 3 shows that the upper side of the transversal supporting profile 5 on which the photovoltaic panels 2 are supported is nearly flat. This provides the opportunity to create a relatively large contact surface with a substantially flat lower side of the photovoltaic panel 2. In general, the contact surface between one photovoltaic panel and the transversal supporting profile 5 may be larger than 80% of an outer surface portion of the transversal supporting profile 5 which faces one panel 2. A large contact surface serves to create a relatively high heat transfer from the photovoltaic panel 2 to the working fluid in the transversal supporting profile 5.

Fig. 2 shows that the ducts 6 of the transversal supporting profile 5 are coupled to a common pipe 9, which is part of a heating circuit for circulating the working fluid through the ducts 6. Only the opposite ends of each transversal supporting profile 5 are coupled to the heating circuit via couplings, whereas no such couplings are present between neigbouring photovoltaic panels 2 along the transversal supporting profile 5.

The invention is not limited to the embodiment shown in the drawings and described hereinbefore, which may be varied in different manners within the scope of the claims and the technical equivalents.

## Claims

1. A power generation system (1) for generating electrical and thermal energy, comprising at least two separate photovoltaic panels (2) for converting sun light into electrical energy and an elongated heat exchanger (5) including a duct (6) for guiding a working fluid, wherein the photovoltaic panels (2) and the heat exchanger (5) are fixed onto each other, **characterized in that** the heat exchanger (5) is made from one piece.

2. A power generation system (1) according to claim 1, wherein the heat exchanger (5) comprises an extruded profile.

3. A power generation system (1) according to claim 1 or 2, wherein the duct (6) extends in longitudinal direction of the heat exchanger (5).

4. A power generation (1) system according to one of the preceding claims, wherein the system (1) comprises a framework (3) of longitudinal and transversal supporting profiles (4, 5) for supporting the photovoltaic panels (2), wherein the longitudinal and transversal profiles (4, 5) are fixed to each other and at least one of said profiles is formed by the heat exchanger (5).

5. A power generation (1) system according to one of the preceding claims, wherein the width of the heat exchanger (5) is smaller than half of the widths of the respective photovoltaic panels (2).

6. A power generation (1) system according to one of the preceding claims, wherein the heat exchanger (5) is a first heat exchanger and the system (1) comprises at least a second heat exchanger (5) which is similar to the first heat exchanger (5) and extends substantially parallel to the first heat exchanger (5), wherein the photovoltaic panels (2) and the heat exchangers (5) are fixed onto each other.

7. A power generation (1) system according to one of the preceding claims, wherein a contact surface between one photovoltaic panel (2) and the heat exchanger (5) is larger than 80% of an outer surface portion of the heat exchanger (5) which faces the panel (2), preferably larger than 90%.

8. A building, comprising an outer side (R) and a power generation system (1) according to one of the preceding claims, wherein the power generation system (1) is mounted on the outer side (R) of the building and the heat exchanger (5) is located between the photovoltaic panels (2) and the outer side (R) of the building.
